# EUROPÄISCHE PATENTANMELDUNG

(11) **EP 0 816 165 A1**
(43) Veröffentlichungstag der Anmeldung: **07.01.1998**
(21) Anmeldenummer: 97111276.8
(22) Anmeldetag: 04.07.1997
(51) Int. Cl.: B60P 1/44

(54) **Plattform für Hubladebühnen**

(30) Priorität: 06.07.1996 DE 19627410
(71) Anmelder: Bär, Gerd, D-74078 Heilbronn (DE)
(72) Erfinder: Bär, Gerd, D-74078 Heilbronn (DE)
(74) Vertreter: KOHLER SCHMID + PARTNER

(57) **Zusammenfassung**

Gegenstand der Erfindung ist eine Plattform für Hubladebühnen eines Fahrzeugs oder dgl., mit einer Oberseite, die als Auflagefläche für zu hebende Gegenstände dient. Die Plattform (10) ist im Querschnitt mehrschichtig durch eine obere und eine untere Deckschicht (12,13) und durch mindestens eine dazwischen angeordnete druckfeste Distanzschicht (11) aufgebaut, wobei das Material der beiden Deckschichten (12,13) andere Materialeigenschaften als das Material der Distanzschicht (11) aufweist. Die beiden Deckschichten (12, 13) sind miteinander schubfest verbunden, wobei bei Belastung der Plattform (10) die Deckschichten (12,13) an der Plattform (10) in der Ebene der Deckschichten (12,13) angreifende Druck- und Zugkräfte aufnehmen und die Distanzschicht (11) zumindest die an den Deckschichten (12,13) quer zu ihren Ebenen angreifenden Druckkräfte aufnimmt.

## Beschreibung

Die Erfindung betrifft eine Plattform für Hubladebühnen eines Fahrzeugs oder dgl., mit einer Oberseite, die als Auflagefläche für zu hebende Gegenstände dient.

Eine derartige Plattform ist beispielsweise durch die deutsche Patentanmeldung P 42 14 438.8 bekanntgeworden.

Die aus der P 42 14 438.8 bekannte Plattform besteht aus Stahl in Blechrippenbauweise. Derartige Stahlplattformen sind vom Werkstoffeinsatz her die billigsten Plattformen und lassen sich fertigungstechnisch preisgünstig herstellen. Allerdings weisen solche Stahlplattformen ein sehr hohes Gewicht auf.

Außerdem sind Aluminiumplattformen in reiner Profilkonstruktion, in Blechrippenkonstruktion und in einer Blech/Profilkonstruktion-Verbindung bekannt. Vorteile von Aluminiumplattformen sind ihre Korrosionsfreiheit, ihre für Werbung nutzbare glatte Rückfläche und ihr geringes Gewicht. Aluminiumplattformen sind allerdings vom Material die teuersten, und die Arbeitskosten sind ebenfalls relativ hoch, da wegen der hohen Ansprüche eine spezielle Fertigung erforderlich ist.

Der vorliegenden Erfindung liegt daher die Aufgabe zu Grunde, eine Plattform der eingangs genannten Art dahingehend weiterzubilden, daß sie vom Werkstoffeinsatz und von der Fertigung ähnlich einer Stahlplattform preisgünstig und dennoch ähnlich einer Aluminiumplattform ein geringes Gewicht aufweist.

Diese Aufgabe wird erfindungsgemäß dadurch gelöst, daß die Plattform im Querschnitt mehrschichtig durch eine obere und eine untere Deckschicht und durch mindestens eine dazwischen angeordnete druckfeste Distanzschicht aufgebaut ist, wobei das Material der beiden Deckschichten andere Materialeigenschaften als das Material der Distanzschicht aufweist, und daß die beiden Deckschichten miteinander schubfest verbunden sind, wobei bei Belastung der Plattform die Deckschichten an der Plattform in der Ebene der Deckschichten angreifende Druck- und Zugkräfte aufnehmen und die Distanzschicht zumindest die an den Deckschichten quer zu ihren Ebenen angreifenden Druckkräfte aufnimmt.

Diese erfindungsgemäße Plattform erfüllt alle an eine Plattform einer Hubladebühne zu stellenden Anforderungen. Insbesondere kann die Plattform Wechselbelastungen in allen Richtungen aufnehmen. Die Plattform ist universell einsetzbar, insbesondere für kleinere Fahrzeuge, die keine einheitlichen Plattformbreiten haben und bei denen die Konstruktion so gestaltet sein muß, daß die Plattformbreiten leicht durch Absägen hergestellt werden können. Die Trennung einer solchen selbsttragenden Plattform von einer zugehörigen Stahlunterkonstruktion der Hubladebühne erlaubt ein kundenspezifisches Gesamtprodukt mit einheitlichen Anschlußmaßen und einheitlichen Anbauteilen. Außerdem läßt sich die Plattform bzw. die Distanzschicht bei Bedarf leicht austauschen. Wenn die Distanzschicht auch Schubkräfte aufnehmen kann, können die Deckschichten entsprechend dünner gewählt werden.

Bei einer ganz besonders bevorzugten Ausführungsform ist jede Deckschicht ein Metallblech, insbesondere ein Aluminium- oder Stahlblech. Das Metallblech dient zur Aufnahme der an der Plattform auftretenden Druck- und Zugkräfte, d.h. zur Erhöhung der Festigkeit im Randbereich und zur Beherrschung der hohen Randspannungen, und weiterhin zum Schutz der Distanzschicht und zur Aufnahme der hohen Punkt- und Linienlasten durch die kleinen Rollen der zu hebenden Rollbehälter. Als Metall sind sowohl Aluminium als auch Stahl möglich, im letzteren Fall vorzugsweise mit einer industriellen Vorbehandlung wie automatischer Bandverzinkung/Feuerverzinkung oder einer Kunststoffbeschichtung. Die Trittfläche auf der oberen Deckschicht kann sowohl in Metall in Form von Erhöhungen (Warzen/Tränen) oder geprägtem Glattblech ausgeführt sein als auch mit anderen Beschichtungen, wie z.B. Kunststoffbeschichtungen mit eingelagerten Quarzkörnern.

Anstelle eines Metallbleches kann aber auch eine Deckschicht aus, insbesondere faserverstärktem, Kunststoff oder aus anderem Material verwendet werden, sofern diese Deckschichten die an der Plattform wirkenden Kräfte aufnehmen können.

Eine besonders bevorzugte Ausführungsform ist dadurch gekennzeichnet, daß die beiden Deckschichten an ihren einen oder beiden Enden direkt miteinander verbunden sind. An der Distanzschicht wirken dann weniger Schubkräfte, so daß diese in Längsrichtung der Plattform geringe Schubfestigkeit aufzuweisen braucht. Dadurch können kostengünstige und leichtere Materialien für die Distanzschicht eingesetzt werden, die lediglich eine ausreichende Druck- und Schubfestigkeit aufweisen müssen.

Bei einer ganz besonders bevorzugten Ausführungsform sind die beiden Deckschichten an ihren einen oder beiden Enden über eine Metallspitze direkt miteinander verbunden. Diese Metallspitze kann aus Aluminium oder aus Stahl bestehen. Die separate Ausbildung der Plattformspitze ermöglicht ein leichtes und gezieltes Austauschen der Metallspitze je nach Einsatzbereich und insbesondere im Falle einer Beschädigung. Über die Metallspitze am freien Ende der Plattform liegt diese im abgesenkten Zustand auf dem Boden auf, während eine Metallspitze am anderen Ende der Plattform als Anschlußflansch zur Befestigung der Plattform an einer geeigneten Unterkonstruktion der Hubladebühne dient. Sind die beiden Enden der Deckschichten miteinander direkt verbunden, braucht die Distanzschicht weniger Schubkräfte aufzunehmen.

Bei einer ersten vorteilhaften Weiterbildung dieser Ausführungsform übergreifen zwei Schenkel der Metallspitze die Distanzschicht und die beiden Deckschichten. In dieser z.B. U-förmigen Aufnahme können die Distanzschicht und die beiden Deckschichten aufgenommen und auch befestigt werden. Durch die U-förmige Aufnahme kann insbesondere bei einer als Mehrschichtverbundplatte ausgebildeten Distanzschicht auch bei extremen Belastungen das Auflösen des Verbundes der einzelnen Platten verhindert werden.

Bei einer zweiten vorteilhaften Weiterbildung dieser Ausführungsform sind in der Ober- und Unterseite der Distanzschicht Aussparungen für die die Distanzschicht übergreifenden Schenkel der Metallspitze vorgesehen, wodurch durch die Schenkel doppelte Klebeflächen bereitgestellt sind.

Bei einer besonders bevorzugten Weiterbildung bzw. Ausgestaltung dieser Ausführungsform ist vorgesehen, daß die Metallspitze ein Aluminiumhohlfachprofil ist. Dies ist deshalb interessant und wichtig, da bei Sonderausführungen Abrollsicherungen gewünscht werden, die sich in ein Aluminiumhohlfachprofil besonders leicht integrieren lassen. Aluminiumhohlfachprofile bzw. -platten können völlig automatisch auf Schweißmaschinen gefügt werden, wodurch nicht nur eine automatische Fertigung möglich ist, sondern auch wegen symmetrischer Schweißung jegliche Richtarbeit entfällt.

Bei einer anderen Weiterbildung ist die Metallspitze durch ein umgebogenes Metallblech gebildet, das an seinem umgebogenen Ende versteift ist und dessen beide Enden jeweils mit einer Deckschicht verbunden sind. Beispielsweise ist das freie umgebogene Ende mit einem Rundmaterial gleichen Werkstoffes versteift.

Eine bevorzugte Weiterbildung dieser Ausführungsform kennzeichnet sich dadurch, daß die Metallspitze über eine Nut-Feder-Verbindung mit der, insbesondere schubfesten, Distanzschicht verbunden ist.

Bei einer weiteren bevorzugten Ausführungsform sind die Deckschichten an ihren beiden Enden direkt miteinander verbunden und ist die Distanzschicht eine in Längsrichtung der Plattform gering schubfeste Platte, insbesondere eine Röhrchen- oder Wabenplatte aus Kunststoff oder Aluminium.

Bei einer ganz besonders bevorzugten Ausführungsform ist die Distanzschicht eine in Längs- und Querrichtung der Plattform schubfeste Platte, insbesondere eine Mehrschichtverbundplatte, vorzugsweise eine Schichtholzplatte, oder eine Spanplatte, vorzugsweise eine Röhrenspanplatte. Eine Schichtholzplatte hat gegenüber einer reinen Metallplattform bei einer Holzdicke von 35-45 mm eine gute thermische Isolierwirkung und stellt bis auf die metallene Plattformspitze, die auch außerhalb der Aufbauöffnung des Fahrzeugs liegen kann, eine einwandfreie thermische Trennung sicher. Außerdem wirkt eine Plattform mit einem Holzkern im Gegensatz zu einer reinen Stahl- oder Aluminiumplattform extrem schalldämmend. Weiterhin läßt sich eine Distanzschicht aus Holz leicht durch Absägen an verschiedene Plattformbreiten anpassen. Bei einer Röhrenspanplatte handelt es sich um eine mit Aussparungen (Durchgangslöcher) versehene Spanplatte.

Als besonders geeignet hat sich die Kombination Schichtholzplatte/Aluminium-Deckschicht erwiesen. Diese Ausführungsform ist optisch vergleichbar mit einer reinen Aluminiumplattform bei einem etwas höheren Gewicht als Aluminium, während die Herstellungskosten der ganzen Plattform die einer Stahlplattform erreichen. Entscheidend dabei ist, daß eine solche Plattform industriell und fast ohne Handarbeit hergestellt werden kann. Die bevorzugte Kombination Schichtholz/Aluminium wirkt im Gegensatz zu einer reinen Stahl- oder Aluminiumplattform extrem schalldämmend, so daß die im Lebensmittelverteilerverkehr erforderlichen schalldämmenden Elastikbeläge entfallen können.

Da die Plattform aus mehreren Bauelementen, nämlich Schichtholzplatte, Deckschichten und metallener Plattformspitze, zusammengesetzt ist, können deren werkstofftypischen Eigenschaften optimal genutzt werden. Gleichzeitig können sehr rationelle Fertigungsmethoden eingesetzt werden. Je nach Einsatzbereich können verschiedene Kombinationen für die Distanzschicht und die Deckschichten gewählt werden, z.B.: Schichtholz/Aluminium; Schichtholz/Stahl (verzinkt oder beschichtet); Aluminium/Hohlfachprofilplatte. Die Plattform hat in allen Kombinationen das Aussehen einer traditionellen Aluminiumplattform. In der bevorzugten Konstruktion Schichtholz/Aluminium wird das Gewicht einer Aluminiumplattform nur um ca. 15 % überschritten.

Da eine schubfeste Distanzschicht auch einen Teil der an der Plattform angreifenden Schubkräfte aufnehmen kann, sind in besonders vorteilhafter Ausgestaltung die beiden Deckschichten an ihren einen oder beiden Enden über die schubfeste Distanzschicht miteinander verbunden. Bei dieser "indirekten" Verbindung sind die beiden Deckschichten mit Hilfe der Distanzschicht verbunden, wobei die Distanzschicht aber nur im Bereich der Verbindung schubfest zu sein braucht, so daß auch eine in Längsrichtung der Plattform mehrteilig aus schubfesten und nicht-schubfesten Teilplatten aufgebaute Distanzschicht möglich ist.

Bei einer bevorzugten Ausführungsform ist vorgesehen, daß die Deckschichten miteinander, mit der Metallspitze und/oder mit der Distanzschicht jeweils durch eine Schraub-, Niet-, Schweiß- und/oder Klebeverbindung verbunden sind. Beispielsweise kann die Metallspitze durch durchgehende Schrauben mit den Deckschichten verschraubt und/oder mit Nieten bzw. Blindnieten vernietet werden. Die Deckschichten werden mit der Distanzschicht vollflächig verklebt. Die Verbindung von Deckschichten aus Aluminium bzw. Stahl und einer Aluminium- bzw. Stahlspitze kann durch Querschweißnähte erfolgen. Außerdem kann sowohl in der oberen als auch in der unteren Deckschicht eine durchgehende enge Vernietung ausgebildet sein. Dabei kann selbstverständlich auch jede Kombination der verschiedenen Verbindungstechniken eingesetzt werden. In jedem Fall sind zur schubfesten Verbindung der beiden Deckschichten mindestens zwei, insbesondere querverlaufende, direkte und/oder indirekte Verbindungen zwischen den beiden Deckschichten erforderlich, die am wirksamsten jeweils am Endbereich der Deckschichten sind.

Bei einer vorteilhaften Ausführungsform ist vorgesehen, daß eine oder mehrere zur Oberseite der Plattform offene Ausnehmungen in der oberen Deckschicht und der Distanzschicht gebildet sind, in die jeweils z.B. ein versenkbares Leuchtelement einsetzbar ist. Insbesondere wenn die obere Deckschicht aus Aluminium und die Trägerplatte aus Holz bestehen, lassen sich derartige Ausnehmungen leicht und auch nachträglich ausbilden.

Eine fertigungstechnisch besonders bevorzugte Ausführungsform ist erfindungsgemäß dadurch gekennzeichnet, daß sich die beiden Deckschichten über die gesamte Länge der Plattform erstrecken und jeweils an ihren die Plattformspitze bildenden Enden direkt miteinander, insbesondere stirnseitig, verbunden sind.

Um eine z.B. aus Holz bestehende Distanzschicht vor einer Beschädigung (Verbrennen, Verglimmen) beim Ausbilden dieser Verbindung beider Deckschichten zu schützen, ist erfindungsgemäß die Plattform dadurch gekennzeichnet, daß die Distanzschicht von einer stirnseitigen Schweißverbindung zwischen den die Plattformspitze bildenden Enden der Deckschichten über einen, insbesondere keil- bzw. trapezförmigen, Metallkörper beabstandet ist.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung. Es zeigt:
- Fig. 1: ein erstes Ausführungsbeispiel einer Plattform mit einer vernieteten Metallspitze an einem Ende der Plattform;
- Fig. 2: ein zweites Ausführungsbeispiel einer Plattform mit einer als Anschlußflansch ausgebildeten Metallspitze aus einem Aluminiumhohlfachprofil am anderen Ende der Plattform;
- Fig. 3: ein drittes Ausführungsbeispiel einer Plattform mit einer in eine Plattformspitze aus einem Aluminiumhohlfachprofil integrierten Abrollsicherung;
- Fig. 4: ein viertes Ausführungsbeispiel einer Plattform mit einem zu einer Plattformspitze umgebogenen Metallblech;
- Fig. 5: ein fünftes Ausführungsbeispiel einer Plattform mit in der Distanzschicht ausgebildeten Aussparungen für eine aufgesetzte Metallspitze;
- Fig. 6: ein sechstes Ausführungsbeispiel einer Plattform mit einer die Distanzschicht und die Deckschichten übergreifenden Metallspitze; und
- Fig. 7: ein siebtes Ausführungsbeispiel einer Plattform mit einer aus einer Span- oder Holzplatte aufgebauten Distanzschicht und mit an ihrem einen Ende miteinander verschweißten Deckschichten.

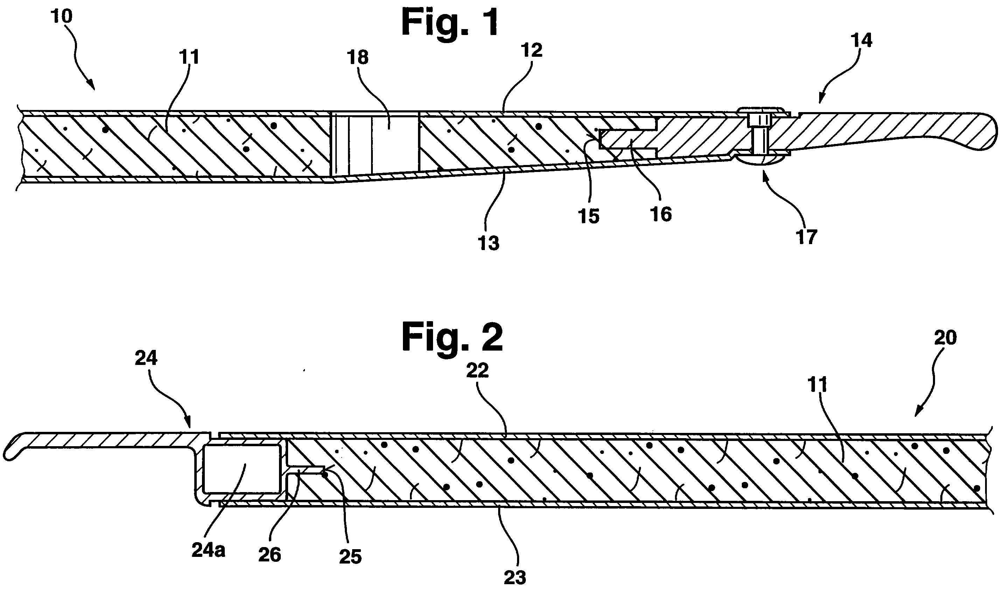

In Fig. 1 ist der vordere Teil einer Plattform 10 für eine Hubladebühne eines Fahrzeugs gezeigt. Die Plattform 10 ist über eine nicht gezeigte Unterkonstruktion am hinteren Ende des Fahrzeugs befestigt.

Die Plattform 10 ist durch eine Mehrschichtholzplatte 11 und zwei dünne Metallbleche 12, 13 aus Aluminium oder Stahl gebildet, welche die Oberseite bzw. Unterseite der Schichtholzplatte 11 abdecken. Eine Metallspitze 14 aus Aluminium oder Stahl ist in einer Quernut 15 in der Schichtholzplatte 11 über eine Feder 16 angeordnet. Die oberen und unteren Metallbleche 12, 13 erstrecken sich über das Ende der Schichtholzplatte 11 hinaus und nehmen dazwischen die Metallspitze 14 auf, mit der die Plattform 10 im abgesenkten Zustand auf dem Boden aufsteht.

Zwischen den beiden Metallblechen 12, 13 und der Metallspitze 14 ist eine Nietverbindung 17, die sich als enge Vernietung über die gesamte Breite der Plattform 10 erstreckt, ausgebildet. Anstelle oder zusätzlich zu dieser Verbindung können die Kontaktflächen zwischen den Metallblechen 12, 13 und der Mehrschichtholzplatte 11, zwischen den Metallblechen 12, 13 und der Metallspitze 14 sowie zwischen der Schichtholzplatte 11 und der Metallspitze 14 miteinander verklebt sein. Die Metallbleche 12, 13 können außerdem über quer verlaufende Schweißnähte (nicht gezeigt) mit der Metallspitze 14 verschweißt sein. Die Metallspitze 14 kann auch durch durchgehende Schrauben mit der Schichtholzplatte 11 lösbar verschraubt sein. Über die Metallspitze 14 sind die beiden Metallbleche 12, 13 an diesem Ende schubfest verbunden, so daß die Schichtholzplatte 11 dort lediglich der Beabstandung der beiden Metallbleche 12, 13 dient.

Das obere Metallblech 12 und die Oberseite der Metallspitze 14 bilden eine ebene Auflagefläche, während die Unterseite der Schichtholzplatte 11 und das untere Metallblech 13 entsprechend dem Verlauf der Unterseite der Metallspitze 14 angeschrägt sind. Weiterhin ist in der Schichtholzplatte 11 und dem oberen Metallblech 12 eine nach oben offene partielle Ausnehmung 18 für ein versenkbares bzw. überrollbares Leuchtelement (nicht gezeigt) vorgesehen.

In Fig. 2 ist das andere Ende einer Plattform 20 gezeigt, das mit einem als Metallspitze 24 ausgebildeten Anschlußflansch zur Befestigung an einer Unterkonstruktion (nicht gezeigt) der Hubladebühne ausgebildet ist. Die Metallspitze 24 ist ein Aluminiumhohlfachprofil mit einer Hohlkammer 24a, wobei die beiden Metallbleche 22, 23 im Bereich dieser Hohlkammer 24a enden und so zwischen ihnen und der Schichtholzplatte 11 eine Hohlnietverbindung (nicht gezeigt) ausgebildet werden kann. Auch bei diesem Ausführungsbeispiel ist die Aluminiumspitze 24 über eine Feder 26 in einer entsprechenden Quernut 25 der Schichtholzplatte 11 aufgenommen.

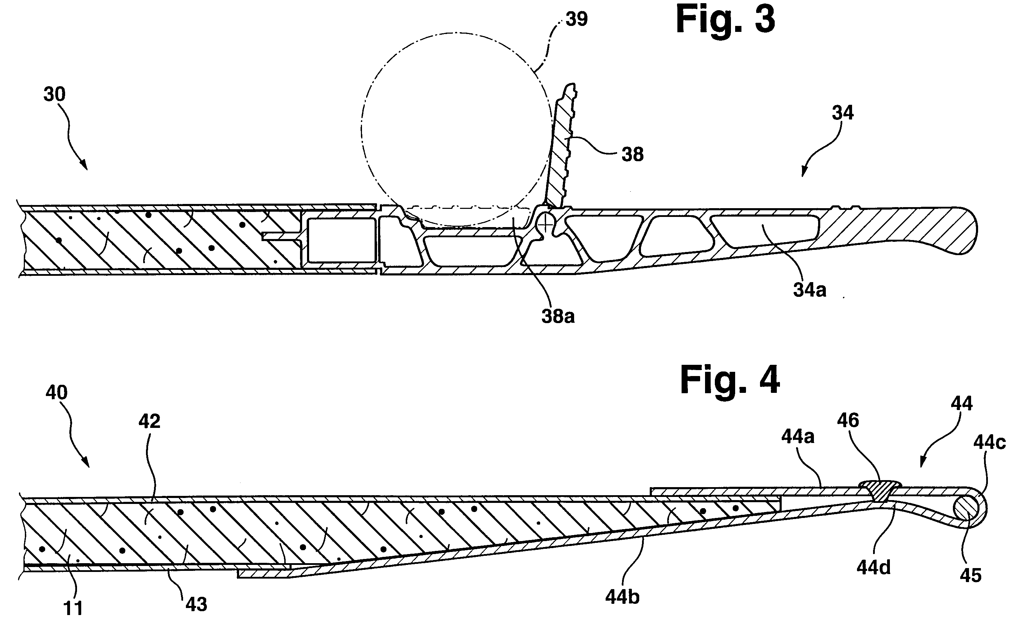

Bei der in Fig. 3 gezeigten Plattform 30 ist eine Aluminiumspitze 34 aus einem Aluminiumhohlfachprofil gebildet, in das eine Abrollsicherung in Form einer ausklappbaren Klappe 38 integriert ist. In ihrem ausgeklappten Zustand ist in der Oberseite der Aluminiumspitze 34 eine Abrollmulde 38a freigegeben, in der die kleinen Rollen 39 der mit der Hubladebühne üblicherweise zu hebenden Rollbehälter gegen ein Abrollen von der Plattform 30 gesichert sind.

Bei der in Fig. 4 gezeigten Plattform 40 ist die Metallspitze 44 durch Umbiegen eines Metallbleches gebildet. Zur Verstärkung des freien Endes 44c der Metallspitze 44 ist das Metallblech um ein Rundmaterial 45 gebogen, welches zwischen den beiden Blechseiten 44a, 44b dadurch festgeklemmt ist, daß die untere Blechseite 44b auf einem Abschnitt 44d über eine Schweißverbindung 46 oder Nietverbindung mit der oberen Blechseite 44a verbunden ist. Die obere Blechseite 44a liegt auf dem oberen Metallblech 42 auf, während die untere Blechseite 44b sowohl direkt an der entsprechend abgeschrägten Schichtholzplatte 11 anliegt als auch auf dem unteren Metallblech 43 aufliegt. Das die Metallspitze 44 bildende Metallblech ist mit den Metallblechen 42, 43 jeweils schubfest verbunden, wozu z.B. zwischen ihnen jeweils eine durchgehende enge Vernietung (nicht gezeigt) vorgesehen sein kann. Die Kontaktfläche zwischen der Schichtholzplatte 11 und den Metallblechen 42, 43 kann als Klebefläche vorgesehen sein.

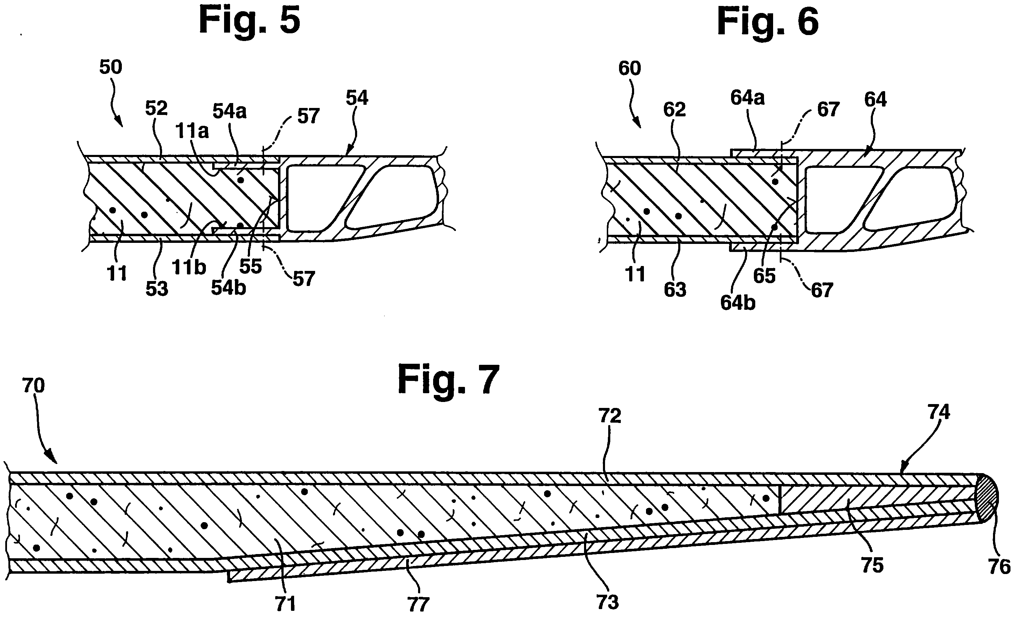

Eine weitere Möglichkeit der Verbindung zeigt Fig. 5, bei der zur Aufnahme der Schenkel 54a, 54b einer U-förmigen Aufnahme 55 der Metallspitze 54 in der Ober- und Unterseite der Schichtholzplatte 11 entsprechende Aussparungen 11a, 11b abgefräst sind. Durch diese Schenkel 54a, 54b ergeben sich doppelte Klebeflächen und werden die einzelnen Schichten der Schichtholzplatte 11 zusammengehalten. Auch bei einer starken Krafteinwirkung, wie sie z.B. beim Rückwärtsfahren bei offener Plattform 50 gegen eine Rampe auftritt, hält die Aluminiumspitze 54 die Schichtholzplatte 11 zusammen. Mit den Bezugsziffern 57 sind Nietverbindungen angedeutet, die trotz Holz als spezielle Blindnieten ausgebildet sein können. Anstelle einer Nietverbindung 57 kann auch eine Schweißverbindung vorgesehen sein, sofern in diesem Bereich die Metallspitze 54 eine Hohlkammer aufweist.

Fig. 6 zeigt eine weitere Ausführungsform einer Plattform 60, bei der die beiden Schenkel 64a, 64b der U-förmigen Aufnahme 65 der Aluminiumpitze 64 die Metallbleche 62, 63 und die Schichtholzplatte 11 übergreifen. Die beiden Schenkel 64, 64b sind z.B. über eine querverlaufende Niet-, Kleb- und/oder Schraubverbindung mit der Schichtholzplatte 11 verbunden.

Bei der in Fig. 7 gezeigten Plattform 70 sind die beiden Metallbleche 72, 73 an einem Ende über eine Schweißverbindung 76 miteinander verbunden, wobei ein als Versteifung dienender keil- bzw. trapezförmiger Metallkörper 75 mitverschweißt ist. Durch diesen Metallkörper 75 ist die Distanzschicht 71 von der Schweißverbindung 76 ausreichend thermisch isoliert und so vor Beschädigung beim Schweißen geschützt. Zwischen den Metallblechen 72, 73 ist eine Spanplatte oder Schichtholzplatte 71 angeordnet. Die an der Plattform 70 angreifenden Schubkräfte werden ausschließlich von den einenends schubfest verbundenen Metallblechen 72, 73 aufgenommen. An der Unterseite der Plattform 70 ist noch ein Unterblech 77 als Verschleiß- und Schutzelement vorgesehen.

Gegenstand der Erfindung ist eine Plattform für Hubladebühnen eines Fahrzeugs oder dgl., mit einer Oberseite, die als Auflagefläche für zu hebende Gegenstände dient. Die Plattform 10 ist im Querschnitt mehrschichtig durch eine obere und eine untere Deckschicht 12, 13 und durch mindestens eine dazwischen angeordnete druckfeste Distanzschicht 11 aufgebaut, wobei das Material der beiden Deckschichten 12, 13 andere Materialeigenschaften als das Material der Distanzschicht 11 aufweist. Die beiden Deckschichten 12, 13 sind miteinander schubfest verbunden, wobei bei Belastung der Plattform 10 die Deckschichten 12, 13 an der Plattform 10 in der Ebene der Deckschichten angreifende Druck- und Zugkräfte aufnehmen und die Distanzschicht 11 zumindest die an den Deckschichten 12, 13 quer zu ihren Ebenen angreifenden Druckkräfte aufnimmt. Die Trennung einer solchen selbsttragenden Plattform von einer zugehörigen Stahlunterkonstruktion der Hubladebühne erlaubt ein kundenspezifisches Gesamtprodukt mit einheitlichen Anschlußmaßen und einheitlichen Anbauteilen.

## Patentansprüche

1. Plattform für Hubladebühnen eines Fahrzeugs oder dgl., mit einer Oberseite, die als Auflagefläche für zu hebende Gegenstände dient,
dadurch gekennzeichnet,
daß die Plattform (10; 20; 30; 40; 50; 60; 70) im Querschnitt mehrschichtig durch eine obere und eine untere Deckschicht (12, 13; 22, 23; 42, 43; 52, 53; 62, 63; 72, 73) und durch mindestens eine dazwischen angeordnete druckfeste Distanzschicht (11; 71) aufgebaut ist,
wobei das Material der beiden Deckschichten (12, 13; 22, 23; 42, 43; 52, 53; 62, 63; 72, 73) andere Materialeigenschaften als das Material der Distanzschicht (11; 71) aufweist, und
daß die beiden Deckschichten (12, 13; 22, 23; 42, 43; 52, 53; 62, 63; 72, 73) miteinander schubfest verbunden sind,
wobei bei Belastung der Plattform (10; 20; 30; 40; 50; 60; 70) die Deckschichten (12, 13; 22, 23; 42, 43; 52, 53; 62, 63; 72, 73) an der Plattform (10; 20; 30; 40; 50; 60; 70) in der Ebene der Deckschichten (12, 13; 22, 23; 42, 43; 52, 53; 62, 63; 72, 73) angreifende Druck- und Zugkräfte aufnehmen und die Distanzschicht (11; 71) zumindest die an den Deckschichten (12, 13; 22, 23; 42, 43; 52, 53; 62, 63; 72, 73) quer zu ihren Ebenen angreifenden Druckkräfte aufnimmt.

2. Plattform nach Anspruch 1, dadurch gekennzeichnet, daß jede Deckschicht (12, 13; 22, 23; 42, 43; 52, 53; 62, 63) ein Metallblech, insbesondere ein Aluminium- oder Stahlblech, ist.

3. Plattform nach Anspruch 1 oder 2, dadurch gekennzeichnet, daß die beiden Deckschichten (72, 73) an ihren einen oder beiden Enden direkt miteinander verbunden sind.

4. Plattform nach einem der vorhergehenden Ansprüche, dadurch gekennzeichnet, daß die beiden Deckschichten (12, 13; 22, 23; 42, 43; 52, 53; 62, 63) an ihren einen oder beiden Enden über eine Metallspitze (14; 24; 34; 44; 54; 64) direkt miteinander verbunden sind.

5. Plattform nach Anspruch 4, dadurch gekennzeichnet, daß zwei Schenkel (64a, 64b) der Metallspitze (64) die Distanzschicht (11) und die beiden Deckschichten (62, 63) übergreifen.

6. Plattform nach Anspruch 4, dadurch gekennzeichnet, daß in der Ober- und Unterseite der Distanzschicht (11) Aussparungen (11a, 11b) für die die Distanzschicht (11) übergreifenden Schenkel (54a, 54b) der Metallspitze (54) vorgesehen sind.

7. Plattform nach einem der Ansprüche 4 bis 6, dadurch gekennzeichnet, daß die Metallspitze (34; 54; 64) ein Aluminiumhohlfachprofil ist.

8. Plattform nach Anspruch 4, dadurch gekennzeichnet, daß die Metallspitze (44) durch ein umgebogenes Metallblech gebildet ist, das an seinem umgebogenen Ende (44c) versteift ist und dessen beide Enden jeweils mit einer Deckschicht (42, 43) verbunden sind.

9. Plattform nach einem der Ansprüche 4 bis 8, dadurch gekennzeichnet, daß die Metallspitze (14; 24; 34) über eine Nut-Feder-Verbindung (15, 16; 25, 26) mit der, insbesondere schubfesten, Distanzschicht (11) verbunden ist.

10. Plattform nach einem der Ansprüche 3 bis 9, dadurch gekennzeichnet, daß die Deckschichten (12, 13; 22, 23; 42, 43; 52, 53; 62, 63; 72, 73) an ihren beiden Enden direkt miteinander verbunden sind und daß die Distanzschicht (71) eine in Längsrichtung der Plattform (10; 20; 30; 40; 50; 60; 70) gering schubfeste Platte (71), insbesondere eine Röhrchen- oder Wabenplatte, ist.

11. Plattform nach einem der Ansprüche 1 bis 9, dadurch gekennzeichnet, daß die Distanzschicht (11) eine in Längs- und Querrichtung der Plattform (10; 20; 30; 40; 50; 60; 70) schubfeste Platte (71), insbesondere eine Mehrschichtverbundplatte, vorzugsweise eine Schichtholzplatte, oder eine Spanplatte, vorzugsweise eine Röhrenspanplatte, ist.

12. Plattform nach Anspruch 11, dadurch gekennzeichnet, daß die beiden Deckschichten (12, 13; 22, 23; 42, 43; 52, 53; 62, 63; 72, 73) an ihren einen oder beiden Enden über die schubfeste Distanzschicht (11) miteinander verbunden sind.

13. Plattform nach einem der vorhergehenden Ansprüche, dadurch gekennzeichnet, daß die Deckschichten (12, 13; 22, 23; 42, 43; 52, 53; 62, 63; 72, 73) miteinander, mit der Metallspitze (14; 24; 34; 44; 54; 64) und/oder mit der Distanzschicht (11; 71) jeweils durch eine Schraub-, Niet- (17), Schweiß- (76) und/oder Klebeverbindung verbunden sind.

14. Plattform nach einem der vorhergehenden Ansprüche, dadurch gekennzeichnet, daß eine oder mehrere zur Oberseite der Plattform (10; 20; 30; 40; 50; 60; 70) offene Ausnehmungen (18) in der oberen Deckschicht (12; 22; 42; 52; 62; 72) und der Distanzschicht (11; 71) gebildet sind.

15. Plattform nach einem der vorhergehenden Ansprüche, dadurch gekennzeichnet, daß sich die beiden Deckschichten (72, 73) über die gesamte Länge der Plattform (70) erstrecken und jeweils an ihren die Plattformspitze bildenden Enden direkt miteinander, insbesondere stirnseitig, verbunden sind.

16. Plattform nach Anspruch 15, dadurch gekennzeichnet, daß die Distanzschicht (71) von einer stirnseitigen Schweißverbindung (76) zwischen den die Plattformspitze bildenden beiden Enden der Deckschichten (72, 73) über einen, insbesondere keil- bzw. trapezförmigen, Metallkörper (75) beabstandet ist.
